(19) Europäisches Patentamt
European Patent Office
Office européen des brevets

(11) **EP 2 704 511 A1**

(12) **EUROPEAN PATENT APPLICATION**
published in accordance with Art. 153(4) EPC

(43) Date of publication:
**05.03.2014  Bulletin 2014/10**

(21) Application number: **12777778.7**

(22) Date of filing: **24.04.2012**

(51) Int Cl.:
**H04W 72/12** (2009.01)        **H04W 72/08** (2009.01)

(86) International application number:
**PCT/JP2012/060971**

(87) International publication number:
**WO 2012/147739 (01.11.2012 Gazette 2012/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2011  JP 2011097572**

(71) Applicant: **NTT DOCOMO, INC.**
**Chiyoda-ku**
**Tokyo**
**100-6150 (JP)**

(72) Inventors:
• **KITOU, Rika**
  **Tokyo 100-6150 (JP)**
• **KIYOSHIMA, Kohei**
  **Tokyo 100-6150 (JP)**

• **OOKUBO, Naoto**
  **Tokyo 100-6150 (JP)**
• **ISHII, Hiroyuki**
  **Tokyo 100-6150 (JP)**
• **OFUJI, Yoshiaki**
  **Tokyo 100-6150 (JP)**
• **IWAMURA, Mikio**
  **Tokyo 100-6150 (JP)**
• **UMESH, Anil**
  **Tokyo 100-6150 (JP)**

(74) Representative: **HOFFMANN EITLE**
**Patent- und Rechtsanwälte**
**Arabellastrasse 4**
**81925 München (DE)**

(54) **BASE STATION IN MOBILE COMMUNICATION SYSTEM, AND RESOURCE ALLOCATION METHOD**

(57)    A base station in a mobile communication system includes: a quality information obtaining unit configured to obtain quality information indicating a radio channel state of a user apparatus; an assignment period selection unit configured to select an assignment period corresponding to the quality information of the user apparatus from a predetermined correspondence relationship between each of a plurality of choices of assignment periods for assigning radio resources to periodic data that occurs periodically and a value of quality information indicating a radio channel state; a scheduling unit configured to determine radio resources to be assigned to the user apparatus in the assignment period that is selected; and a radio communication unit configured to communicate, by radio, user data including periodic data of the user apparatus by using the radio resources determined by the scheduling unit.

FIG.3

**Description**

TECHNICAL FIELD

The present invention relates to a base station in a mobile communication system and a method for resource assignment.

BACKGROUND ART

Frequency scheduling is one of the technologies for improving frequency usage efficiency in a mobile communication system.

In a dynamic scheduling scheme, radio resources are dynamically assigned to users based on data-type associated priorities and radio channel conditions. For example, for each subframe (TTI) of 1 ms, it is determined which radio resource should be assigned to which user. Radio resources can be flexibly utilized because radio resources, which are assigned to users, can be changed frequently.

In the mean time, there are many different types of data being exchanged by users. There are voice data or voice packets (VOIP), whose data amount is small, and whose delay time is required to be short. There are data for data communication, whose data amount is large, and whose delay time is not so required to be short. With the voice data (VOIP), a small amount of data is generated periodically. When the dynamic scheduling is applied for this kind of voice data, radio resources have to be assigned to each small amount of periodic voice data. In this case, compared to the whole data being communicated, the signaling overhead required for the resource notification is large. Thus, there is a concern that use efficiency of radio resources becomes deteriorated.

In the dynamic scheduling, when data to be transmitted arises in the user apparatus, the user apparatus transmits a scheduling request (SR) to the base station first. The base station performs scheduling only after receiving the SR, and as a result of the scheduling, the base station reports a signaling to the user apparatus to instruct data transmission. Therefore, delay from occurrence of the uplink data to actual transmission becomes large.

A semi-persistent scheduling scheme (SPS) is a method for overcoming this kind of concern. In the semi-persistent scheduling scheme, one radio resource assignment is applied not only for a single subframe but also for many following subframes. In other words, by assigning periodically a given amount of radio resources, the signaling overhead for resource assignment can be reduced. Therefore, if every user apparatus in the mobile communication system is semi-persistent scheduling (SPS) capable, then the above concern can be resolved by using the SPS for radio resource assignment for voice data. Also, since the radio resources are assigned periodically, it is not necessary to transmit SR each time when data occurs like the dynamic scheduling, thus, delay can be reduced.

However, since the semi-persistent scheduling scheme (SPS) is not essential in the 3GPP standard, a user apparatus in a mobile communication system does not necessarily support the semi-persistent scheduling. If every user apparatus does not support SPS, it is necessary to perform radio resource assignment by using the dynamic scheduling scheme after all. Then, it becomes necessary to specify radio resources one by one for each of pieces of the small amount of voice data that periodically occurs, so there is a concern of the above-mentioned problem in that the overhead becomes large.

Further, there is a concern for a problem that the number of users who can use the voice service is limited to a small number due to the increase of the overhead. It is assumed that N is the number of users to whom radio resources can be specified in 1 subframe in which scheduling is performed for each subframe (TTI) of 1ms. Since voice data occurs periodically, and when the period is T, the number of uses who can use the voice service at the same time (that is, voice capacity) is $N \times T$. For example, in a case where N = 3, and T = 20 ms, the voice capacity becomes $3 \times 20 = 60$ persons.

As one of techniques for increasing the capacity, there is a delay packing scheme. For example, even though voice data of a user occurs every T = 20 ms, transmission of voice data is restricted such that voice data is transmitted to the user only every 2T = 40 ms. By doing so, it becomes possible to double the voice capacity. The delay packing is described in the non-patent document 1 (in the non-patent document 1, a name of packet bundling is used). In the non-patent document 1, a method is proposed for increasing the voice capacity by EUL.

Generally, for decoding voice data, it is necessary to supply encoded voice data to a decoder with a constant period. When transmission is performed by the delay packing scheme with a period longer than the occurrence period of the voice data, jitter of arriving intervals of the voice data occurs in the receiving side. However, if the range of the jitter falls within a predetermined range, the effect can be removed by a de-jitter buffer.

In the non-patent document 1, a method is disclosed for applying delay packing in EUL. In EuL, the bandwidth is fixed. Thus, a radio resource assignment period is changed by controlling transmission power control and data transmission timing when transmitting data to realize delay packing (however, in EUL, since selection of a transmission format is performed by the mobile terminal, there remains a doubt about whether delay packing is realized as intended in the method disclosed in the non-patent document 1). On the other hand, in the LTE scheme, since variable bandwidth control is applied in the uplink, it is necessary to select a transmission bandwidth, a transmission power, a modulation scheme and a TBS in consideration of power density per bandwidth so as to be able to transmit a necessary data size (data size after packing).

RELATED ART DOCUMENT

[NON-PATENT DOCUMENT 1] Oscar Fresan, et al., "Dynamic Packet Bundling for VoIP Transmission Over Rel'7 HSUPA with 10ms TTI Length,"IEEE ISWCS 2007, pp.5008-512

SUMMARY OF THE INVENTION

PROBLEM TO BE SOLVED BY THE INVENTION

As mentioned above, in the delay packing scheme, the period for assigning radio resources for transmitting and receiving voice data is set to be longer than the period of occurrence of voice data to reduce signaling overhead so as to increase the voice capacity.

In the radio communication environment, the amount of data that can be transmitted at one time varies according to radio quality. Therefore, if delay packing is applied to every user, a data error occurs for users of bad radio quality and it becomes necessary to perform retransmission and the like as a result. Thus, it is necessary to adaptively control applying/not-applying of delay packing and the number of packets for packing according to radio quality. The present invention discloses a method for controlling applying/not-applying of delay packing and the number of packets for packing according to radio quality in the uplink of LTE.

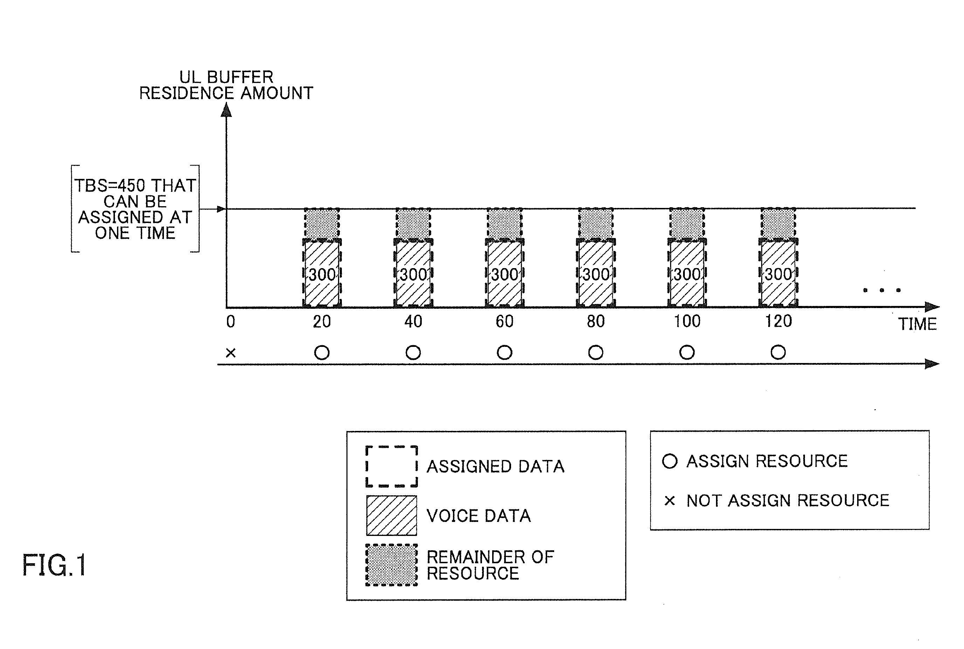

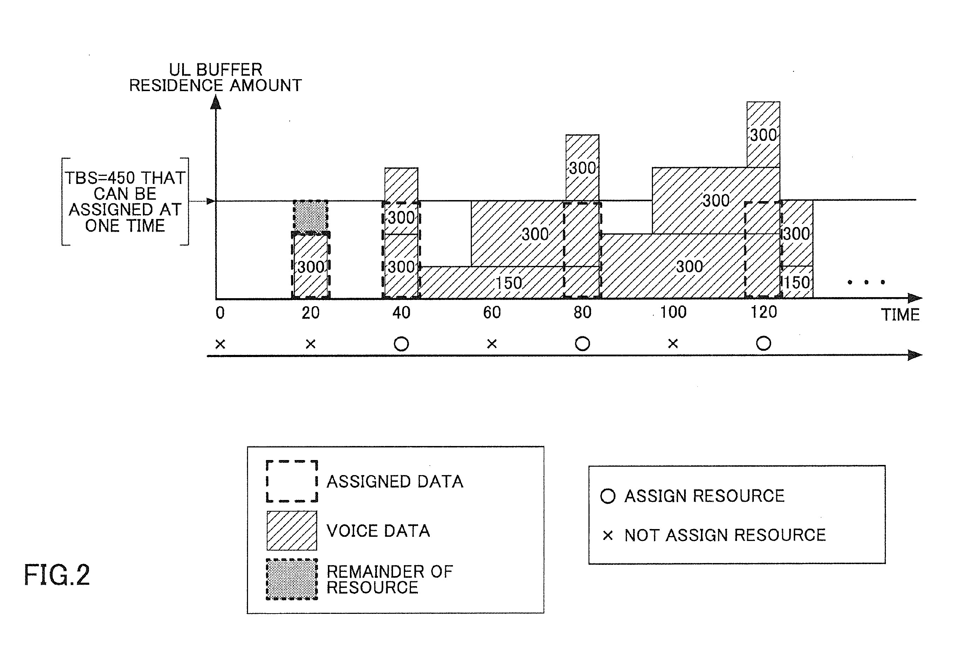

In the delay packing, the longer the assignment period is, the more the voice capacity increases. But, there is a concern that voice quality is deteriorated if the assignment period is too long. This problem is described with reference to Figs. 1 and 2.

Fig. 1 shows a situation in which radio resources are not effectively used when delay packing is not performed. In the example shown in the figure, the horizontal axis indicates a time and the vertical axis indicates a residence amount of voice data waiting for uplink transmission. Although data does not occur at 0ms, 300 bits of voice data occurs every 20 ms after 20 ms, and 450 bits of transport block size (TBS) is assigned to voice data every 20 ms. In this example, only a part of the assigned resources is used, and the remaining part (150 bits of TBS) is wasted.

Fig. 2 shows a situation where delay packing is performed. In this example, like Fig. 1, although data does not occur at 0 ms, 300 bits of voice data occurs every 20 ms after 20 ms. Different from the case of Fig. 1, radio resources are assigned every 40 ms which is a period twice longer than the period with which data occurs. Accordingly, by setting the assignment period of radio resources to be twice larger than the period with which data occurs, it becomes possible to increase the voice capacity while eliminating wasted radio resources.

In the example of Fig. 2, although 300 bits of data occurs at 20 ms, radio resources are not assigned at this point of time since the time has not reached 40 ms that is the assignment period yet. At 40 ms, 300 bits of data occurs further, and 450 bits of data is assigned at this point of time, and 150 bits of data remains in the buffer. Although 300 bits of data occurs at 60 ms, radio resources are not assigned at this point of time since it is not an assignment period. 300 bits of data occurs at 80 ms, radio resources are assigned for 450 bits of data at this point of time, and 300 bits of data remains in the buffer. Although 300 bits of data occurs at 100 ms, radio resource are not assigned at this point of time since it is not an assignment period. 300 bits of data further occurs at 120 ms, radio resource are assigned for 450 bits of data at this point of time, and 450 bits of data remains in the buffer.

Accordingly, in the example shown in the figure, radio resources are assigned every 40 ms, like 40ms, 80ms, 120ms. But, in every case, all data remained in the buffer cannot be transmitted, and some data remains, and remaining data amount increases as time passes. As a result, a long delay (for example, delay equal to or longer than 200 ms) that is not permissible for voice data occurs. Thus, there is a concern that quality of voice data is deteriorated.

As mentioned above, when the assignment period of the radio resources are short, there is a concern in that the radio resources are wasted and that the voice capacity is decreased. On the other hand, when the assignment period is increased, the voice capacity improves. But, there is a concern of deterioration of voice quality when the assignment period is too long.

An object of the present invention is to assign radio resources for user data that includes at least data that occurs periodically without excess or deficiency according to a situation of a user. Also, an object is to assign radio resources such that a delay from occurrence of uplink data to actual transmission of the data does not become large.

MEANS FOR SOLVING THE PROBLEM

A base station according to an embodiment is a base station in a mobile communication system including:

a quality information obtaining unit configured to obtain quality information indicating a radio channel state of a user apparatus;

an assignment period selection unit configured to select an assignment period corresponding to the quality information of the user apparatus from a predetermined correspondence relationship between each of a plurality of choices of assignment periods for assigning radio resources to periodic data that occurs periodically and a value of quality information indicating a radio channel state;

a scheduling unit configured to determine radio resources to be assigned to the user apparatus in the assignment period that is selected; and

a radio communication unit configured to communicate, by radio, user data including periodic data of the user apparatus by using the radio resources determined by the scheduling unit.

## EFFECT OF THE PRESENT INVENTION

According to an embodiment, it is possible to assign radio resources for user data that includes at least data that occurs periodically without excess or deficiency according to a situation of a user. Also, for data that occurs periodically, since radio resource assignment is performed in time with a period regardless of presence or absence of a scheduling request, control channels can be saved.

## BRIEF DESCRIPTION OF THE DRAWINGS

Fig. 1 is a diagram for explaining that radio resources are wasted when delay packing is not performed;

Fig. 2 is a diagram for explaining that a delay increases when the assignment period is long in a case where delay packing is performed;

Fig. 3 is a functional block diagram of a base station used in an embodiment;

Fig. 4 is a diagram showing a situation in which a talk spurt period and a silent period occur alternately;

Fig. 5 is a diagram showing an example of a predetermined correspondence relationship;

Fig. 6 is a flowchart showing an operation example in the base station;

Fig. 7 is a detailed flowchart of step S623 shown in Fig. 6;

Fig. 8 is a diagram showing a situation for assigning radio resources without excess or deficiency with a proper assignment period;

Fig. 9 is a diagram showing a situation in a case where not only periodic data but also non-periodic data are transmitted and received;

Fig. 10 is a diagram showing a modified example in which radio resources are assigned in timing other than the assignment period;

Fig. 11 is a diagram showing operation for assigning radio resources even at a timing other than the assignment period only when a predetermined condition is satisfied (showing a case where the predetermined condition is not satisfied);

Fig. 12 is a diagram showing operation for assigning radio resources even at a timing other than the assignment period only when a predetermined condition is satisfied (showing a case where the predetermined condition is satisfied); and

Fig. 13 is a flowchart showing an operation example in the modified example.

## EMBODIMENTS FOR CARRYING OUT THE INVENTION

A base station of an embodiment realizes applying or not applying delay packing by increasing or not increasing a period for assigning radio resources to voice data to a period longer than an occurrence period of the voice data according to a radio channel state of each user apparatus, and the base station realizes changing the packing number in delay packing by changing the period for assigning radio resources to voice data and a transport block size. The base station of the embodiment determines an assignment period for assigning radio resources to periodic data that occurs periodically, a transport block size to be assigned with the assignment period, and the number of resource blocks to be assigned with the assignment period. Since the assignment period and the like corresponding to the packing number are determined according to the radio channel state, it is possible to assign radio resources suitable for a communication situation of the user apparatus. In the present embodiment, the periodic data that occurs periodically is voice data typically, but not limited to the voice data. For example, as another concrete example of periodic data, there is a case where a control signal of a machine or a game is transmitted.

In a case where non-periodic data occurs at non-periodic timing in addition to the periodic data that occurs periodically, there is a concern that non-periodic data of low priority remains in a transmission buffer indefinitely. The reason is that, normally, the priority of the periodic data is higher than the priority of the non-periodic data. The base station of the embodiment assigns radio resources in a subframe of an assignment period for the user apparatus, and, in addition to that, the base station assigns radio resources also in one or more of subframes following the subframe when the low priority data occurs.

However, in a case where the base station assigns radio resources in the subframe of the assignment period of the user apparatus and in one or more of subframes following the subframe, if an amount of data to be transmitted in the one or more of subframes is small, there is a concern that radio resources are wasted. In order to solve this problem, when non-periodic data occurs in addition to the periodic data, the base station of the embodiment compares a total sum of a current data residence amount and a data amount of voice data that occurs until the next assignment period with an amount of data that can be transmitted in the next subframe. As a result, if the data amount that can be transmitted in the next time is greater than the total sum of the data amounts, radio resources are not assigned in the subframe following the subframe of the assignment period. The reason is that, if the radio resources are assigned in the following subframe, wasteful radio resources occur. On the other hand, if the data amount that can be transmitted is smaller than the total sum of the information amounts, radio resources are assigned in the subframe following the subframe of the assignment period. The reason is that wasteful radio resources do not occur in this case.

An embodiment is described from the viewpoints of the following aspects.

1. Base station
2. Operation example for determining optimal assignment period for each UE
3. Modified example for assigning radio resources even at a timing other than assignment period
4. Modified example for assigning radio resources even at a timing other than assignment period only when a predetermined condition is satisfied.

[Embodiment 1]

<1. System>

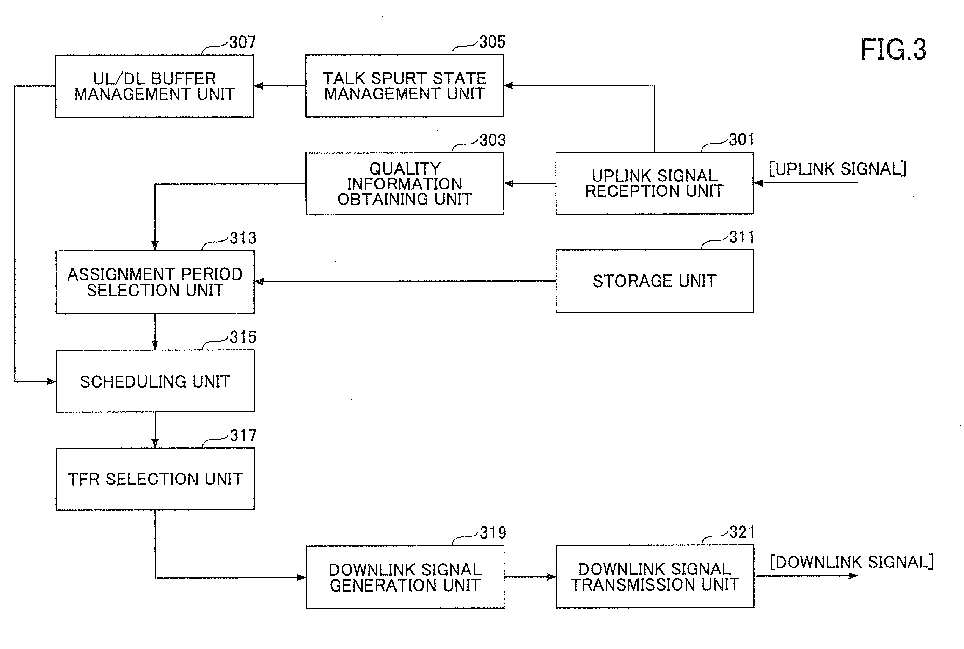

Fig. 3 shows a functional block diagram of a base station used in an embodiment. Fig. 3 shows processing units which are especially related to the present embodiment in processing units provided in the base station of a mobile communication system for realizing various functions. For the sake of convenience, the base station shown in Fig. 3 is a base station for, for example, a mobile communication system of the Long Term Evolution (LTE) scheme. The base station can be a base station for a mobile communication system of other schemes. Fig. 3 shows an uplink signal reception unit 301, a quality information obtaining unit 303, a talk spurt state management unit 305, an uplink/downlink (UL/DL) buffer management unit 307, a storage unit 311, an assignment period selection unit 313, a scheduling unit 315, a TFR selection unit 317, a downlink signal generation unit 319, and a downlink signal transmission unit 321.

The uplink signal reception unit 301 receives an uplink signal from a user apparatus UE, and converts the signal into a baseband signal. Therefore, the uplink signal reception unit 301 includes a filtering function for filtering the received radio signal, a function for converting an analog signal into a digital signal, a function for demodulating the received signal, and a function for performing channel-decoding on the received signal. In general, the uplink signal includes a control channel, a pilot channel, and a data channel, etc. The user apparatus UE can be any communication apparatus, or any mobile terminal, or any fixed terminal, as long as it can communicate with the base station through a radio link. The user apparatus UE can be but is not limited to, a mobile telephone, an information terminal, a sophisticated mobile telephone, a smart phone, a tablet computer, a personal digital assistant, a handheld personal computer, etc.

The quality information obtaining unit 303 obtains quality information indicating good or bad of a radio channel state from an uplink signal. The quality information is included in a control channel. The quality information may be information indicating a radio channel state of the downlink, may be information indicating a radio channel state of the uplink, or may be information including both of them.

The radio channel state of the downlink can be expressed as, for example, a Channel Quality Indicator (CQI) which is derived from a reception level of a pilot signal received by the user apparatus. The radio channel state of the uplink may be derived from a reception level of a pilot signal received by the base station. The reception level of the pilot signals received by the user apparatus and the base station can be expressed in any form known to a person skilled in the art. As an example, the reception level may be defined as a radio channel quality indication, regardless for indicating an instantaneous quality of the radio channel or indicating an average quality of the radio channel. For example, the reception level may be expressed in the form of a received signal strength indicator RSSI, a desired wave received power RSRP, RSRQ indicating received quality, path loss, SNR, SIR, Ec/No, etc. The desired wave in RSRP, RSEQ, SNR, SIR, SINR and the like may be power of a shared data channel (PUSCH, PDSCH), or may be power of a pilot signal (sounding reference signal (SRS), demodulation reference signal (DMRS)).

In a case where a user communicates voice data, the talk spurt state management unit 305 determines whether a communication state is in a talk spurt period or in a silent period, and manages communication states. When a human has a conversation, a talk spurt period that is a speaking section and a silent period that is a silent section appear alternately.

In the following description, for the sake of simplicity, although an example is described in a case where a user communicates voice data, the present embodiment is not limited to voice data, and can be applied to any case where a signal that periodically occurs is communicated. For example, in the present embodiment, a control signal of a machine or a game may be used.

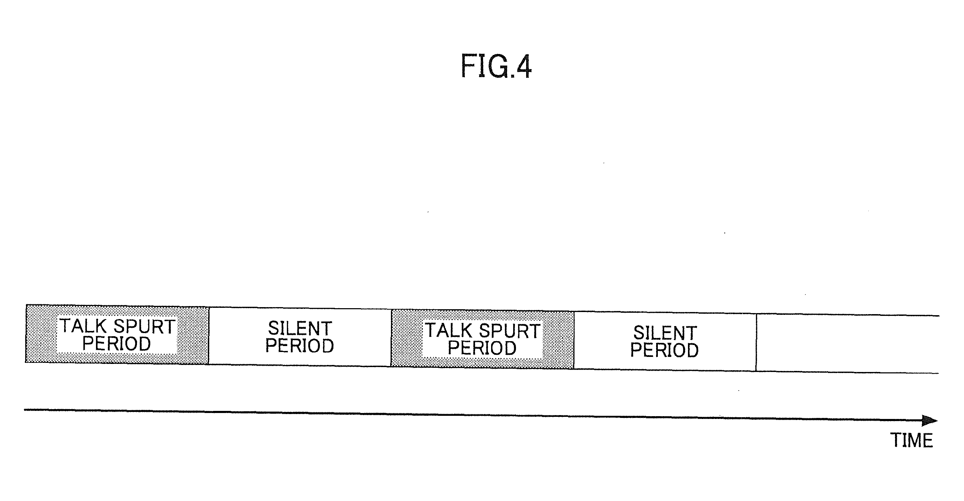

Fig. 4 shows a situation in which the talk spurt period and the silent period occur alternately. In general, in a talk spurt period of about 0.4 - 1.2 second, voice data of a period of 20 ms occurs.

The talk spurt state management unit 305 of Fig. 3 determines whether a current time corresponds to a talk spurt period for each user, and manages the result. Whether the current time is in the talk spurt period may be determined in the following way, for example.

For example, after a base station receives voice data and starts a timer in a talk spurt period, if the base station does not receive voice data until the timer expires, a period after that may be determined to be a silent period. Or, if the base station does not receive an uplink shared data channel including voice data continuously equal to or more than predetermined number of times, a period after that may be determined to be a silent period. Also, if a buffer residence amount of voice data in a silent period is within a range of a predetermined value, a period after that may be determined to be a talk spurt period. The value of the timer and the range of the value are properly set beforehand as amounts for determining whether a user occurs. Operation in the present embodiment is performed in the talk spurt period and the operation is not performed in the silent period.

The UL/DL buffer management unit 307 manages a status (data residence amount) of the buffer for the data transmitted in the uplink and the downlink. The buffer status (data residence amount) of data transmitted in the downlink can be known by checking a status of a transmission buffer (not shown in the figure) provided in the base station. On the other hand, the buffer status (data residence amount) for data transmitted in the uplink can be known by receiving, from a user apparatus, a buffer status report BSR indicating a status of a transmission buffer provided in the user apparatus UE.

When radio resource are assigned to a user apparatus, the data residence amount managed in the base station is updated such that the data residence amount decreased by the assigned size. However, it takes some time for the base station to report assignment of resources to the user apparatus UE, and for the user apparatus UE to transmit data, and to ascertain that the base station receives the data without an error. Therefore, in the uplink, there is a possibility that an actual data residence amount stored in the transmission buffer of the user apparatus UE is not the same as a data residence amount managed by the UL/DL buffer management unit based on the buffer status report BSR. In the present embodiment, the uplink data residence amount is a value, in principle, obtained by subtracting a size of already assigned radio resources from a buffer size indicated by the buffer status report BSR. However, when the value is a negative value, the data residence amount of the uplink is set to be 0.

When calculating the size of the data residence amount, it is preferable to consider not only the size (the number of bits) of the transport block size TBS, but also the size of the header. Although the size of the header is not large (1/30 of TBS, for example), it is preferable to consider the size of the header from the viewpoint of more accurate buffer management.

The storage unit 311 stores a predetermined correspondence relationship among each of a plurality of choices of assignment periods for assigning radio resources to periodic data that periodically occurs, a value of quality information indicating a radio channel state, a value of a transport block size that can be assigned in the assignment period, and the number of resource blocks that can be assigned in the assignment period.

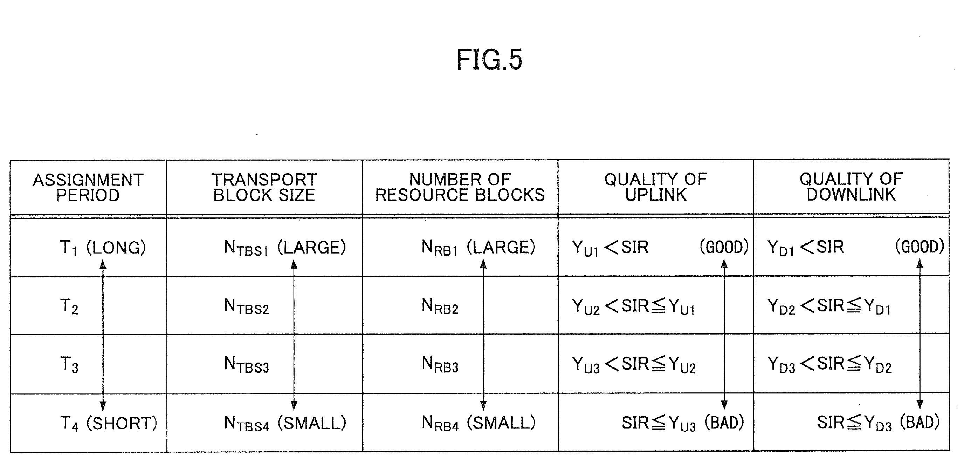

Fig. 5 shows an example of the predetermined correspondence relationship. In the example shown in the figure, assignment periods $T_1$-$T_4$, transport sizes $N_{TBS1}$-$N_{TBS4}$ that can be assigned at one time, uplink quality SIR and downlink quality SIR are associated with each other. The assignment period is a period with which radio resources are assigned for data that arises periodically. The transport block size indicates a data size that can be transmitted at one time. The number of resource blocks indicates the number of resource blocks that can be assigned at one time. The quality indicates good or bad of the radio channel sate of the uplink or downlink. In these correspondence relationships, the assignment period and the quality (uplink or downlink) are essential, but correspondence relationship for the data amount (transport block size) is not essential. But, from the viewpoint of accurately selecting an assignment period suitable for a communication situation of the user, it is preferable that the transport block size and the number of resource blocks are associated with the period. Although qualities of the uplink and the downlink are represented by SIR, the quality may be represented by other amounts.

In general, as to the assignment period, $T_1$ is the longest, and the assignment period becomes shorter gradually in order of $T_2$, $T_3$, and $T_4$. More generally, $T_1 \geqq T_2 \geqq T_3 \geqq T_4$ holds true. As to the transport block size, $N_{TBS1}$ is the largest, and the transport block size becomes smaller gradually in order of $N_{TBS2}$, $N_{TBS3}$, and $N_{TBS4}$. More generally, $N_{TBS1}$

$\geqq N_{TBS2} \geqq N_{TBS3} \geqq N_{TBS4}$ holds true. As to the number of resource blocks, $N_{RB1}$ is the maximum, and the he number of resource blocks becomes fewer gradually in order of $N_{RB2}$, $N_{RB3}$, and $N_{RB4}$. More generally, $N_{RB1} \geqq N_{RB2} \geqq N_{RB3} \geqq N_{RB4}$ holds true.

The threshold of quality on the uplink becomes smaller in order of $Y_{U1}$, $Y_{U2}$, and $Y_{U3}$. The threshold of quality on the uplink becomes smaller in order of $Y_{D1}$, $Y_{D2}$, and $Y_{D3}$. Therefore, the better the quality of the uplink or the downlink is, the longer the assignment period is, and the larger the data amount (transport block size) that can be assigned is. On the other hand, the worse the quality of the uplink or the downlink is, the shorter the assignment period is, and the smaller the data amount (transport block size) that can be assigned is. Whether to apply delay packing is realized by whether to increase the period for assigning radio resources to voice data to a period longer than the occurrence period of the voice data, and changing the packing number in delay packing is realized by changing a period for assigning radio resources to voice data and the transport block size. The assignment period selection unit 313 selects an assignment period corresponding to quality information of a user apparatus from the predetermined correspondence relationship. The assignment period selection unit 313 refers to the predetermined correspondence relationship shown in Fig. 5, and selects the assignment frequency corresponding to quality SIR of each user apparatus UE.

The scheduling unit 315 calculates a scheduling coefficient for a user (user apparatus) for which there is data for communication. The scheduling unit 315 assigns radio resources preferentially to a user for whom the value of the scheduling coefficient is relatively large (or, for whom a priority is determined to be high in a hard decision). The scheduling coefficient may be calculated in any proper way. As an example, the scheduling coefficient may be calculated by a MaxC/I method or a Proportional Fairness method. Also, besides the scheduling coefficient, any parameter may be used for determining the priority of the user apparatus.

The TFR (Transport Format and Resource) selection unit 317 determines a transmission format (data modulation scheme and channel coding rate) and resource blocks according to an instruction from the scheduling unit 315.

The downlink signal generation unit 319 generates a downlink signal including a control signal and a shared data channel. The control channel indicates how radio resources are assigned to the user apparatus. For a mobile communication system of the LTE scheme, the control channel corresponds to a physical downlink control channel (PDCCH). More specifically, the control channel includes information such as an identifier of a user for whom radio resources are assigned, a resource block assigned in the downlink and/or the uplink, and a data format (data modulation scheme and channel coding rate) and the like. The shared data channel includes user data. In general, the shared data channel includes voice data (VoIP), real time data, data for data communication and the like. For the mobile communication system of the LTE scheme, the data channel corresponds to a physical downlink shared channel (PDSCH).

The downlink signal transmission unit 321 transmits a downlink signal generated by the downlink signal generation unit 319. Therefore, the downlink signal transmission unit 321 includes a function for performing channel coding on data to be transmitted, a function for performing data modulation on data to be transmitted, a function for converting a digital signal into an analog signal, a function for filtering a signal to be transmitted, and a function for amplifying a signal to be transmitted, and the like.

<2. Operation example for determining an optimal assignment period for each UE>

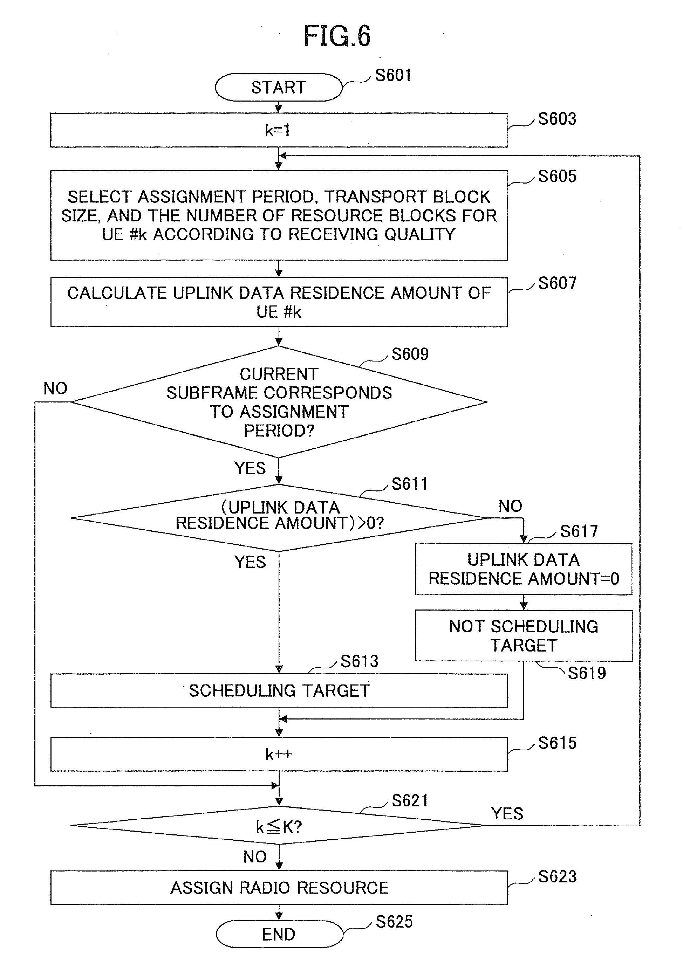

Fig. 6 is a flowchart showing an operation example in the base station shown in Fig. 5. The flow starts from step 601 and goes to step S603.

In step S603, the base station initializes a parameter k for specifying a user to whom a bearer is set into 1. The total number of users for whom a bearer is set is K. As a precondition for the following operation, it is assumed that the base station has obtained quality information for each of one or more user apparatuses to which a bearer is set. As mentioned above, although the quality information indicates a radio channel state of the uplink or the downlink in general, it is assumed that the quality information is obtained by measuring reception quality of the uplink by the base station for the sake of convenience of explanation.

In step S605, the base station refers to the predetermined correspondence relationship as shown in Fig. 5, and selects an assignment period, a transport block size and a number of resource blocks that are associated with a reception quality $SIR_k$ of a k-th user apparatus UE#k. As a result, an assignment period of radio resources, a transport block size and the number of resource blocks are determined in a case where the k-th user apparatus UE#k transmits voice data (periodic data).

It is not preferable that the assignment period and the like of each user apparatus are changed frequently from the standpoint of stability of operation. Therefore, hysteresis characteristics may be added to the predetermined correspondence relationship shown in Fig. 5 for the reception quality in a case where the assignment period and the like are selected from the reception quality. That is, a threshold Y of a quality when the assignment period is changed from T to T' may be different from a threshold Y' of a quality when the assignment period is changed from T' to T.

In step S607, the base station calculates a residence amount of uplink data of the k-th user apparatus UE#k. The uplink data residence amount is calculated or updated based on a buffer status report BSR reported from the user apparatus and a size of radio resources assigned in the past.

In step S609, the base station determines whether the current subframe corresponds to the assignment period selected in S605. For example, when the selected assignment period is 30 ms, it is determined whether the current subframe corresponds to a subframe of just 30ms. When the current subframe corresponds to the assignment period, the flow goes to step S611, if not, the flow goes to step S623.

In step S611, the base station determines whether there is uplink data in the k-th user apparatus UE#K. More specifically, it is determined whether the uplink data residence amount calculated in step S607 is positive. When the uplink data exists, the flow goes to step S613.

In step S613, the k-th user apparatus UE#k is determined to be a candidate (target of scheduling) for which radio resources are assigned, and a scheduling coefficient is calculated. The priority may be calculated in any proper method. As an example, the scheduling coefficient may be calculated by a MaxC/I method or a Proportional Fairness method.

In step S615, the value of parameter k is incremented.

In step S611, if the uplink data residence amount is not positive, the value of the uplink data residence amount is set to 0 in step S617. As mentioned before, there is a time difference until an actual data amount in the transmission buffer of the user apparatus UE is reflected in an uplink data residence amount managed by the base station based on the buffer status report BSR. Therefore, the value of the uplink data residence amount that is not a positive value is set to be 0 in step S611.

In step S619, the user apparatus for which the uplink data residence amount is not positive is excluded from a candidate to which radio resources are assigned (excluded from a target for scheduling).

In step S621, it is determined whether the value of the parameter k is equal to or less than the total number K of user apparatuses in which a bearer is set. When the value of the parameter k is equal to or less than K, the flow returns to step S605, and processes already described are performed for the incremented k-th user apparatus. When the value of the parameter k becomes larger than K, the flow goes to step S623.

In step S623, the base station assigns radio resources to one or more user apparatuses in user apparatuses that are targets for scheduling.

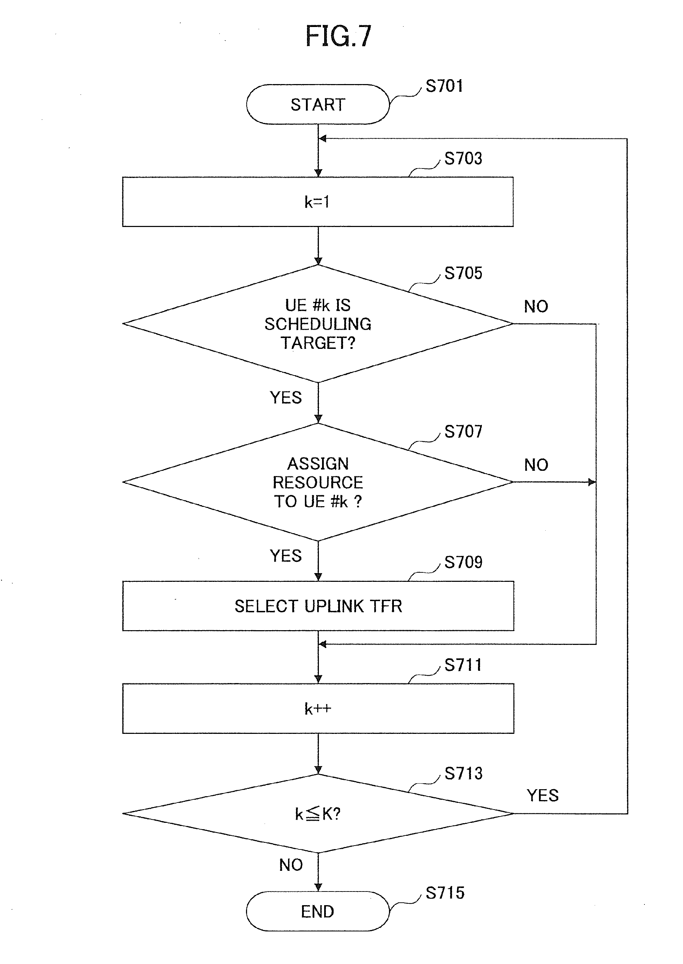

Fig. 7 shows a flowchart showing detailed operation of step S623 of Fig. 6. The flow starts in step S701, and goes to step S703.

In step S703, the base station initializes the parameter k specifying a user for whom a bearer is set to 1.

In step S705, the base station determines whether a k-th user apparatus UE#k is a target of scheduling, which can be determined from a result of steps S613 and S619 in Fig. 6. If the k-th user apparatus UE#k is not a target of scheduling, the flow goes to step S711, and if the k-th user apparatus UE#k is a target of scheduling, the flow goes to step S707.

In step S707, the base station determines whether to assign radio resources to a k-th user apparatus UE#k in user apparatuses that are targets of scheduling. As an example, the radio resources are assigned to a user apparatus in which the value of the scheduling coefficient is relatively large (or to a use apparatus for which the priority is determined to be high in a hard decision).

In step S709, a transmission format (MCS), a resource block and a transport block size and the like are determined for the user apparatus UE#k for which radio resources are determined to be assigned. The number of resource blocks and the transport block size for periodic data such as voice data have been determined in step S605 of Fig. 6. However, for data other than data that occurs periodically, the transport block size and the like are determined in step S709.

In step S711, the value of the parameter k is incremented.

In step S713, it is determined whether the value of the parameter k is equal to or less than the number K of all user apparatuses for which a bearer is set. When the value of the parameter k is equal to or less than K, the flow returns to step S703, and processes already described are performed for the incremented k-th user apparatus. When the value of the parameter k becomes greater than K, the flow goes to steps S715 and S625, so that assignment process of radio resources for a current subframe ends. After that, the flow returns to step S601, and processes already described are performed for a next subframe.

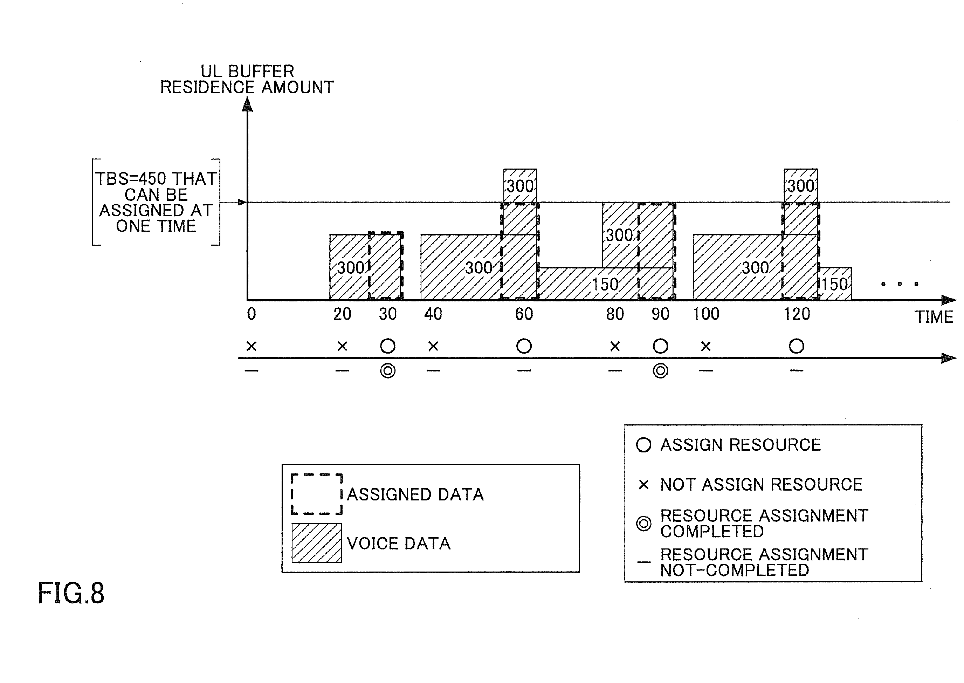

Fig. 8 shows a situation in which a user apparatus is assigned radio resources according to the above-mentioned operation example. Data does not occur at 0 ms, but 300 bits of voice data occurs every 20 ms after 20 ms. For this user apparatus, in step S605 of Fig. 6, the assignment period is set to be 30 ms, and the data amount (transport block size) is properly set as 300 bits and 450 bits.

Although 300 bits of voice data occurs at 20 ms, since the time has not yet reached the assignment period of 30 ms, radio resources are not assigned at this point of time. At 30 ms, 300 bits of radio resources that are determined in this subframe are assigned, and the data residence amount becomes 0. Although 300 bits of voice data occurs at 40 ms, since the time has not yet reached the next assignment period of 60 ms, radio resources are not assigned at this point of time. At 60 ms, 300 bits of voice data occurs, radio resources for 450 bits that are determined in this subframe are assigned, and the data residence amount becomes 150 bits. Although 300 bits of voice data occurs at 80 ms, since the time has not reached the next assignment period of 90 ms, radio resources are not assigned at this time point. At 90 ms, radio resources for 450 bits are assigned, so that the data residence amount becomes 0. Although 300 bits of voice data occurs at 100 ms, since the time has not reached the next assignment period of 120 ms, radio resources are not assigned at this time point. At 120 ms, 300 bits of voice data further occurs, radio resources for 450 bits are assigned at this point of time, so that 150 bits of data residence amount remain in the buffer.

As mentioned above, according to the present embodiment, in step S605 in each subframe, since an assignment period and an assignment data amount corresponding to quality information of respective user apparatuses are selected, voice data and the like can be transmitted and received with a period suitable for a communication situation of the user apparatus. As a result, deterioration of voice quality concerned in the example shown in Fig. 2 can be effectively prevented.

<3. Modified example in which radio resources are assigned at timing other than assignment period>

In the operation example described with reference to Figs. 6-8, whether to perform delay packing and an assignment period and the like are selected according to the communication situation of the user apparatus. Thus, radio resources can be assigned for periodic data such as voice data without excess or deficiency. However, the user apparatus transmits and receives not only periodic data but also non-periodic data that occurs at a non-periodic timing. When non-periodic data to be transmitted occurs in the user apparatus, the fact that there is such data is reported to the base station by a buffer status report BSR.

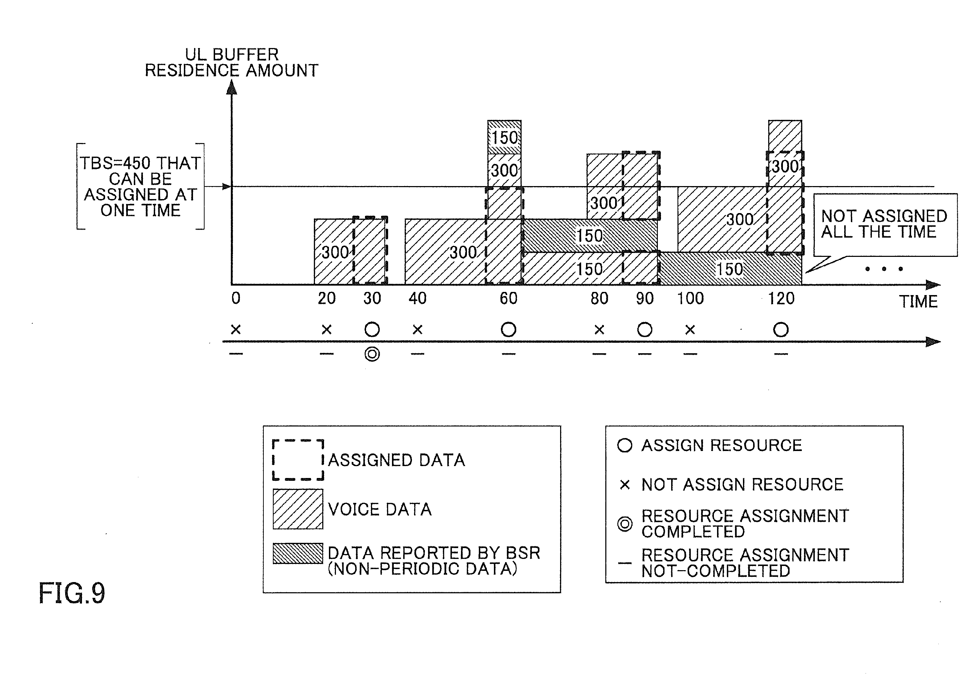

Fig. 9 shows a situation in a case where not only periodic data but also non-periodic data are transmitted and received. Generally, Fig. 9 is similar to the example shown in Fig. 8. But, they are different in that non-periodic data occurs at 60 ms. The non-periodic data is data via the Internet or data of an email and the like, and a lower priority than the periodic data such as the voice data is set.

Therefore, when radio resources are assigned at 90 ms, radio resources are assigned to voice data preferentially, and 150 bits of non-periodic data remains. At 100 ms, 300 bits of voice data occurs. At 120 ms, radio resources for 450 bits are assigned for 300 bits of voice data that occurs at this time point and 300 bits of remaining voice data. Thus, 150 bits of voice data and 150 bits of non-periodic data remain. Thus, for the non-periodic data having a priority lower than that of the periodic data, chances for being assigned radio resources decrease, and there is a concern that data remains for a long time in the transmission buffer. For solving the concern, the base station of this modified example assigns radio resources at a timing other than the assignment period when a predetermined condition is satisfied.

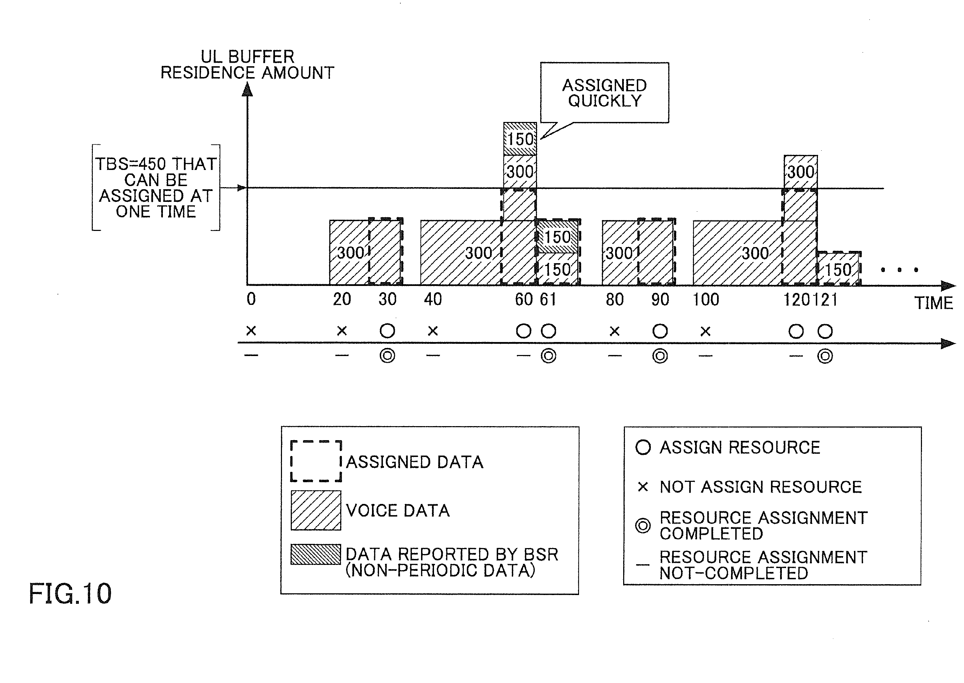

Fig. 10 shows an example by the modified example in which radio resources are assigned even in a timing other than the assignment period.

At 0 ms, data does not occur. Every 20 ms after 20 ms, 300 bits of voice data occurs. For this user apparatus, in step S605 of Fig. 6, the assignment period is set to be 30 ms, and the data amount (transport block size) is properly set as 300 bits and 450 bits.

Although 300 bits of voice data occurs at 20 ms, since the time has not yet reached the assignment period of 30 ms, radio resources are not assigned at this point of time.

At 30 ms, 300 bits of radio resources that are determined in this subframe are assigned, and the data residence amount becomes 0.

Although 300 bits of voice data occurs at 40 ms, since the time has not yet reached the next assignment period of 60 ms, radio resources are not assigned at this point of time.

At 60 ms, 300 bits of voice data occurs, in addition to that, 150 bits of non-periodic data occurs. Radio resources for 450 bits determined in this subframe are assigned, and 150 bits of voice data and 150 bits of non-periodic data remain.

At 61 ms, radio resources are assigned for the remaining 300 bits of data (150 bits of voice data and 150 bits of non-periodic data), so that the data residence amount becomes 0. Thus, in this modified example, when non-periodic data occurs, radio resources are assigned not only at the assignment period but also at the following timing.

Although 300 bits of voice data occurs at 80 ms, since the time has not yet reached the next assignment period of 90 ms, radio resources are not assigned at this point of time.

At 90 ms, 450 bits of radio resources are assigned, and the data residence amount becomes 0.

Although 300 bits of voice data occurs at 100 ms, since the time has not yet reached the next assignment period of 120 ms, radio resources are not assigned at this point of time.

At 120 ms, 300 bits of voice data occurs. Radio resources for 450 bits determined in this subframe are assigned, and 150 bits of voice data and 150 bits of non-periodic data remain.

At 121 ms, radio resources are assigned for the remaining 150 bits of voice data, so that the data residence amount becomes 0. Thus, in this modified example, when non-periodic data occurs, radio resources are assigned not only at the assignment period but also at the following timing.

In this modified example, in step S607 of the flowchart of Fig. 6, it is determined whether to perform assignment of radio resources even at timing other than the assignment period. In this determination, it is determined whether the data residence amount exceeds an information amount (450 bits in this example) that can be assigned at one time at the subframe of the assignment period. When the data residence amount exceeds the information amount that can be assigned at one time, assignment of radio resources is to be performed even at the timing other than the assignment period. Thus, in step S609, at the current subframe and at the following subframe, the flow goes to step S611, and the flow goes to step S621 in other cases. For the sake of convenience of explanation, although radio resources are assigned in the subframe of the assignment period and one following subframe, radio resources may be assigned in one or more subframes following the subframe of the assignment period. For example, in the above example, it is assumed that the data residence amount in the subframe of 60 ms is 1500 bits for voice data and non-periodic data. In this case, radio resources for 450 bits, 450, bits, 450 bits, and 150 bits are assigned in subframes of 60ms, 61ms, 62ms and 63ms respectively.

<4. Modified example for assigning radio resources at a timing other than the assignment period only when a predetermined condition is satisfied>

In the above-mentioned modified example, radio resources are assigned even at a timing other than the assignment period when the data residence amount exceeds the information amount (450 bits in this example) that can be assigned at one time. However, there is a problem in that radio resources used at the timing other than the assignment period are not necessarily used effectively. In the example shown in Fig. 10, in a case where radio resources assigned in a subframe of 61 ms correspond to 450 bits, there is a concern that radio resources for 150 bits are wasted. In this modified example, such a problem is addressed.

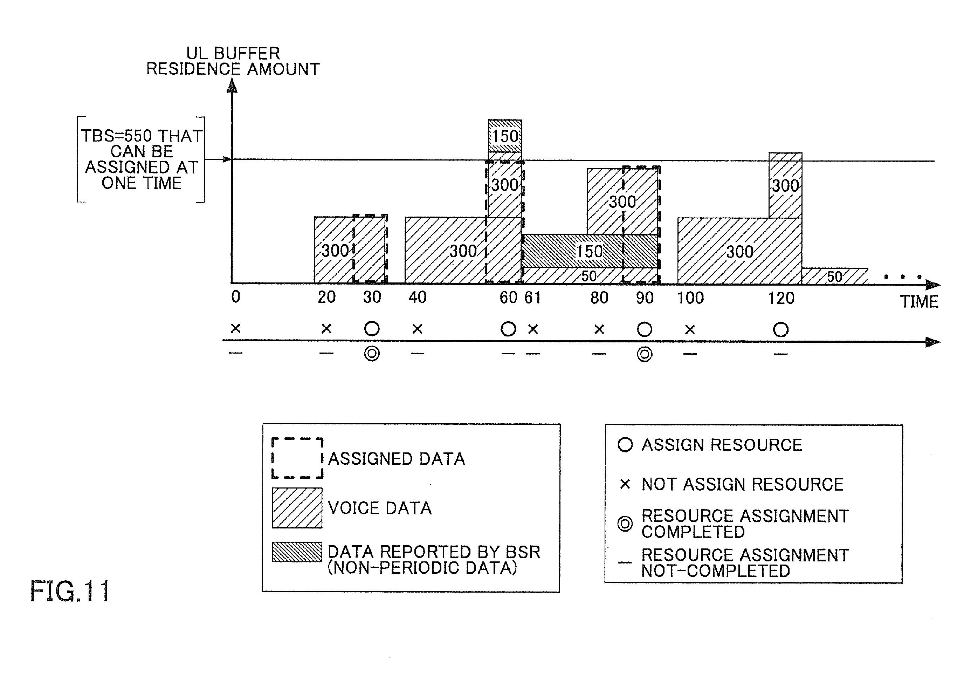

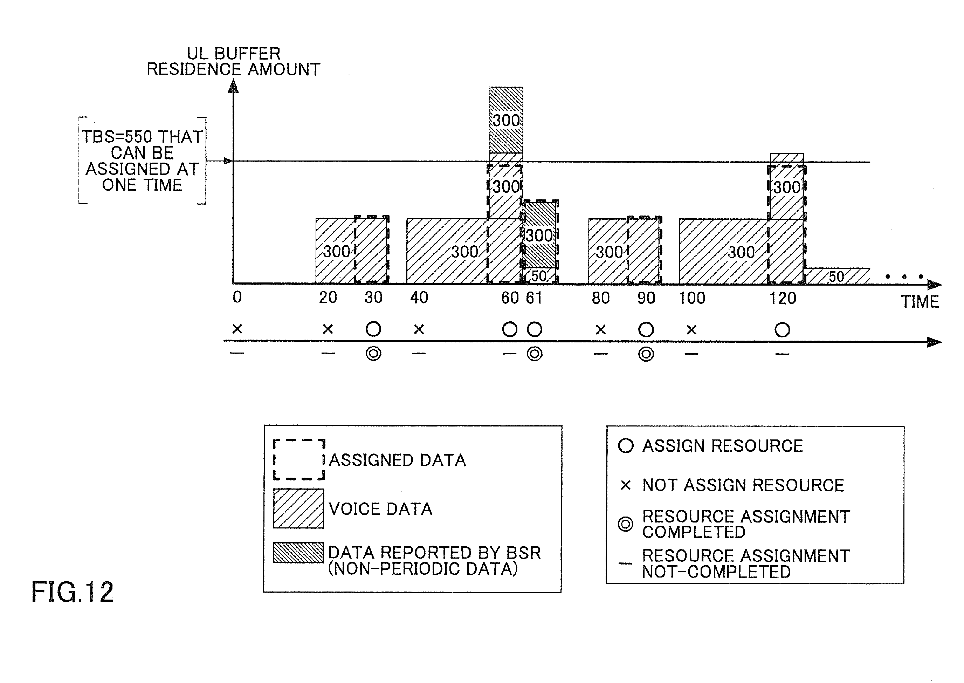

Fig. 11 and Fig. 12 show operation for assigning radio resources even at a timing other than the assignment period only when a predetermined condition is satisfied. Fig. 11 shows a case where the predetermined condition is not satisfied, and Fig. 12 shows a case where the predetermined condition is satisfied. For the sake of convenience of explanation, it is assumed that a data amount that can be assigned at one time is 550 bits instead of 450 bits.
At 0 ms, data does not occur. Every 20 ms after 20 ms, 300 bits of voice data occurs. For this user apparatus, in step S605 of Fig. 6, the assignment period is set to be 30 ms, and the data amount (transport block size) is properly set as 300 bits and 550 bits.
Although 300 bits of voice data occurs at 20 ms, since the time has not yet reached the assignment period of 30 ms, radio resources are not assigned at this point of time.
At 30 ms, 300 bits of radio resources that are determined in this subframe are assigned, and the data residence amount becomes 0.
Although 300 bits of voice data occurs at 40 ms, since the time has not yet reached the next assignment period of 60 ms, radio resources are not assigned at this point of time.
At 60 ms, 300 bits of voice data occurs, in addition to that, 150 bits of non-periodic data occurs. Radio resources for 550 bits determined in this subframe are assigned, and 50 bits of voice data and 150 bits of non-periodic data remain.
At 61 ms, in the example shown in Fig. 10, radio resources are assigned unconditionally. On the other hand, in this modified example, radio resources are assigned at a following timing other than the assignment period only when non-periodic data occurs and a predetermined condition is satisfied. No radio resource is assigned at the timing other than the assignment period if the predetermined condition is not satisfied even when the non-periodic data occurs. The predetermined condition is that a total sum of the data residence amount that currently remains and an amount of voice data that occurs until a time of a subframe of a next assignment period cannot be transmitted in the subframe at the next assignment period. That is, the condition is to satisfy the following inequality:

```
        (residence amount of currently remaining
    data) + (data amount of voice data that occurs until
    a subframe of the next assignment period)>(data
    amount that can be transmitted in the subframe of
    the next assignment period).
```

In this example, all of the total sum (450 bits) of the residence amount of currently remaining data (200 bits = voice data 50 bits + non-periodic data 150 bits) and data amount (300 bits) of voice data that occurs until a subframe at the next assignment period can be transmitted by the subframe of the next assignment period. The reason is that 550 bits can be transmitted in the subframe of the next assignment period of 90 ms. In this case, radio resources are not assigned in a following subframe of 61 ms and the like other than 60 ms of the assignment period.
Although 300 bits of voice data occurs at 80 ms, since the time has not yet reached the next assignment period of 90 ms, radio resources are not assigned at this point of time.

At 90 ms, 550 bits of radio resources are assigned, and the data residence amount becomes 0.

Although 300 bits of voice data occurs at 100 ms, since the time has not yet reached the next assignment period of 120 ms, radio resources are not assigned at this point of time.

At 120 ms, 300 bits of voice data further occurs. In this case, only voice data occurs. Voice data is communicated at the assignment period. Thus, regardless of whether the predetermined condition is satisfied, radio resources are assigned for voice data of 550 bits in the subframe of 120 ms, and radio resources are not assigned in the subframe of 121 ms. As a result, 50 bits of data residence amount remains in the buffer.

Fig. 12 shows operation for assigning radio resources even at a timing other than the assignment period only when a predetermined condition is satisfied. Fig. 12 is almost similar to Fig. 11, but is different from Fig. 11 in that Fig. 12 shows a case where the predetermined condition is satisfied. Also in this case, it is assumed that a data amount that can be assigned at one time is 550 bits instead of 450 bits.

At 0 ms, data does not occur. Every 20 ms after 20 ms, 300 bits of voice data occurs. For this user apparatus, in step S605 of Fig. 6, the assignment period is set to be 30 ms, and the data amount (transport block size) is properly set as 300 bits and 550 bits.

Although 300 bits of voice data occurs at 20 ms, since the time has not yet reached the assignment period of 30 ms, radio resources are not assigned at this point of time.

At 30 ms, 300 bits of radio resources that are determined in this subframe are assigned, and the data residence amount becomes 0.

Although 300 bits of voice data occurs at 40 ms, since the time has not yet reached the next assignment period of 60 ms, radio resources are not assigned at this point of time.

At 60 ms, 300 bits of voice data occurs, in addition to that, 150 bits of non-periodic data occurs. Radio resources for 550 bits determined in this subframe are assigned, and 50 bits of voice data and 150 bits of non-periodic data remain.

As mentioned above, in this modified example, at 61 ms, radio resources are assigned at a following timing other than the assignment period only when non-periodic data occurs and a predetermined condition is satisfied. The predetermined condition is to satisfy the following inequality:

$$\text{(residence amount of currently remaining data)} + \text{(data amount of voice data that occurs until a subframe of the next assignment period)} > \text{(data amount that can be transmitted in the subframe of the next assignment period)}.$$

In this example, the total sum (650 bits) of the residence amount of currently remaining data (350 bits = voice data 50 bits + non-periodic data 300 bits) and data amount (300 bits) of voice data that occurs until a subframe at the next assignment period cannot be transmitted by the subframe of the next assignment period. The reason is that only 550 bits can be transmitted in the subframe of the next assignment period of 90 ms. Therefore, radio resources are assigned in a following subframe of 61 ms and the like other than 60 ms of the assignment period.

At 61 ms, radio resources are assigned for the remaining 350 bits of data (50 bits of voice data and 300 bits of non-periodic data), so that the data residence amount becomes 0. Thus, in this modified example, when non-periodic data occurs and the predetermined condition is satisfied, radio resources are assigned at the assignment period and at the following timing.

Although 300 bits of voice data occurs at 80 ms, since the time has not yet reached the next assignment period of 90 ms, radio resources are not assigned at this point of time.

At 90 ms, 300 bits of radio resources are assigned, and the data residence amount becomes 0.

Although 300 bits of voice data occurs at 100 ms, since the time has not yet reached the next assignment period of 100 ms, radio resources are not assigned at this point of time.

At 120 ms, 300 bits of voice data further occurs. In this case, different from the case of 60 ms, only voice data occurs. Voice data is communicated at the assignment period. Thus, regardless of whether the predetermined condition is satisfied, radio resources are assigned for voice data of 550 bits in the subframe of 120 ms, and radio resources are not assigned in the subframe of 121 ms. As a result, 50 bits of data residence amount remains in the buffer.

As mentioned above, in this modified example, radio resources are not assigned in the following subframe other than the assignment period when the predetermined condition is not satisfied even though non-periodic data occurs (Fig. 11). Radio resources are assigned in the following subframe other than the assignment period only when non-periodic data occurs and the predetermined condition is satisfied (Fig. 12). Accordingly, waste of data can be reduced.

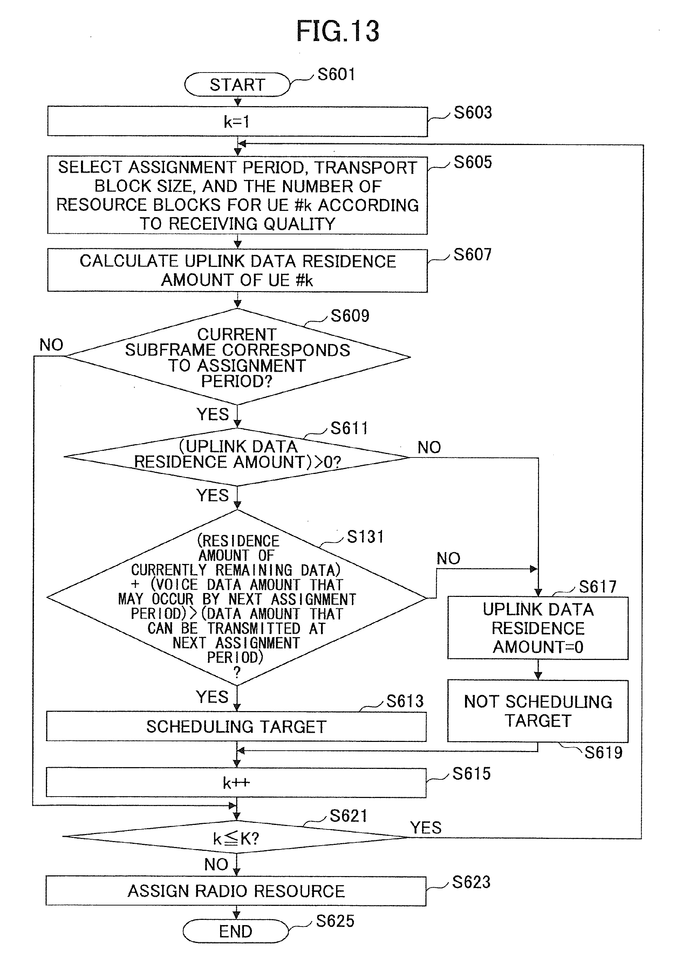

Fig. 13 is a flowchart showing an operation example of this modified example. This flow is almost the same as that shown in Fig. 6. But, processes in steps S609 and S131 are mainly different. The flow starts from step 601 and goes to step S603.

In step S603, the base station initializes a parameter k for specifying a user to whom a bearer is set into 1.

In step S605, the base station refers to the predetermined correspondence relationship as shown in Fig. 5, and selects an assignment period, a transport block size and a number of resource blocks that are associated with a reception quality $SIR_k$ of a k-th user apparatus UE#k.

In step S607, the base station calculates a residence amount of uplink data of the k-th user apparatus UE#k. The uplink data residence amount is calculated or updated based on a buffer status report BSR reported from the user apparatus and a size of radio resources assigned in the past. In step S607, it is determined whether to perform assignment of radio resources even at timing other than the assignment period. In this determination, it is determined whether the data residence amount exceeds an information amount (550 bits in this example) that can be assigned at one time at the subframe of the assignment period. When the data residence amount exceeds the information amount that can be assigned at one time, there is a possibility that assignment of radio resources is performed even at the timing other than the assignment period.

In a case where there is a possibility that assignment of radio resources is performed even at the timing other than the assignment period, in step S609, the base station determines whether the current subframe corresponds to a subframe of the assignment period selected in step S605 or following predetermined number of subframes. For example, when the selected assignment period is 60 ms, the base station determines whether the current subframe corresponds to a subframe of 60 ms or a subframe of 61 ms. When the current subframe corresponds to a subframe of the assignment period or a following subframe, the flow goes to step S611, if not, the flow goes to step S623.

In step S611, the base station determines whether there is uplink data in the k-th user apparatus UE#k. More specifically, it is determined whether the uplink data residence amount calculated in step S607 is positive. When the uplink data exists, the flow goes to step S613.

In step S131, the base station determines whether a predetermined condition is satisfied. The predetermined condition is to satisfy the following inequality:

$$\text{(residence amount of currently remaining data)} + \text{(data amount of voice data that occurs until a subframe of the next assignment period)} > \text{(data amount that can be transmitted in the subframe of the next assignment period)}.$$

When the predetermined condition is satisfied, the flow goes to step S613, and when the predetermined condition is not satisfied, the flow goes to step S617.

For example, for a subframe at 60 ms shown in Fig. 11, 750+300>550 holds true, and the inequality is satisfied. Thus, the flow goes to step S613, so that the k-th user apparatus UE#k becomes a target of scheduling at 60 ms. For a subframe at 61 ms, 200+300<550 holds true, and the inequality is not satisfied. Thus, the flow goes to step S617, so that the k-th user apparatus UE#k is excluded from a target of scheduling at 61 ms.

For a subframe at 60 ms shown in Fig. 12, 900+300>550 holds true, and the inequality is satisfied. Thus, the flow goes to step S613, so that the k-th user apparatus UE#k becomes a target of scheduling at 60 ms. For a subframe at 61 ms, 350+300>550 holds true, and the inequality is satisfied. Thus, the flow goes to step S613, so that the k-th user apparatus UE#k becomes a target of scheduling at 61 ms.

In step S613, the k-th user apparatus UE#k is determined to be a candidate (target of scheduling) for which radio resources are assigned, and a scheduling coefficient is calculated.

In step S615, the value of parameter k is incremented.

In step S611, if the uplink data residence amount is not positive, the value of the uplink data residence amount is set to 0 in step S617.

In step S619, the user apparatus for which the uplink data residence amount is not positive is excluded from a candidate to which radio resources are assigned (excluded from a target for scheduling).

In step S621, it is determined whether the value of the parameter k is equal to or less than the total number K of user apparatuses in which a bearer is set. When the value of the parameter k is equal to or less than K, the flow returns to step S605, and processes already described are performed for the incremented k-th user apparatus. When the value of the parameter k becomes larger than K, the flow goes to step S623.

In step S623, the base station assigns radio resources to one or more user apparatuses in user apparatuses that are targets for scheduling according to the flow shown in Fig. 7. After that, the flow goes to step S625, and processing for assigning radio resources in the current subframe ends. After that, the flow returns to step S601, and processes already described are performed in the next subframe.

As described above, the present invention is described referring to specific embodiments. These embodiments are described just as examples. A person skilled in the art would easily understand various modified embodiments, amended embodiments, alternative embodiments and replacement embodiments. For example, the present invention can be applied to any kind of mobile communication systems in which periodic data is communicated.

While specific numerical value examples are used to facilitate understanding of the present invention, such numerical values are merely examples, and any appropriate value may be used unless specified otherwise. Specific mathematical expressions are used in the present embodiments for the sake of easy understanding, but are used just as examples. Any kind of mathematical expressions, unless otherwise noted, can be used.

Classification into each embodiment or item in the description is not essential in the present invention, and features described in two or more items may be combined and used as necessary. Subject matter described in an item may be applied to subject matter described in another item (provided that they do not contradict). For convenience of explanation, the apparatus according to the embodiment of the present invention has been explained by using a functional block diagram. However, the apparatus may be implemented in hardware, software, or a combination thereof. The software may be stored in any proper storage medium such as a RAM (Random Access Memory), a flash memory, a ROM (Read Only Memory), an EPROM(Erasable Programmable ROM), an EEPROM(Electronically Erasable and Programmable ROM), a register, a hard disk (HDD), a removable disk, a CD-ROM, database, server and the like.

Therefore, the present invention is not limited to the above-mentioned embodiment and is intended to include various variations, modifications, alterations, substitutions and so on without departing from the spirit of the present invention.

The present international application claims priority based on Japanese patent application No. 2011-097572, filed in the JPO on April 25, 2011, and the entire contents of the Japanese patent application No. 2011-097572 are incorporated herein by reference.

DESCRIPTION OF REFERENCE SIGNS

301 uplink signal reception unit
305 quality information obtaining unit
305 talk spurt state management unit
307 UL/DL buffer management unit
311 storage unit
313 assignment period selection unit
315 scheduling unit
317 TFR selection unit
319 downlink signal generation unit
321 downlink signal transmission unit

**Claims**

1. A base station in a mobile communication system comprising:

   a quality information obtaining unit configured to obtain quality information indicating a radio channel state of a user apparatus;
   an assignment period selection unit configured to select an assignment period corresponding to the quality information of the user apparatus from a predetermined correspondence relationship between each of a plurality of choices of assignment periods for assigning radio resources to periodic data that occurs periodically and a value of quality information indicating a radio channel state;
   a scheduling unit configured to determine radio resources to be assigned to the user apparatus in the assignment period that is selected; and
   a radio communication unit configured to communicate, by radio, user data including periodic data of the user apparatus by using the radio resources determined by the scheduling unit.

2. The base station as claimed in claim 1, wherein the predetermined correspondence relationship includes a correspondence relationship among:

   each of a plurality of choices of assignment periods for assigning radio resources to periodic data that occurs periodically,
a value of quality information indicating a radio channel state,
a value of a transport block size that can be assigned in an assignment period, and
a number of resource blocks that can be assigned in an assignment period.

3. The base station as claimed in claim 2, wherein the radio communication unit communicates, by radio, the user data by using the transport block size and the number of resource blocks corresponding to the assignment period.

4. The base station as claimed in claim 1, wherein, when a residence amount of data waiting for communication in a subframe of the assignment period that is selected is greater than an amount of data that can be communicated in the subframe, the scheduling unit assigns, to the user apparatus, radio resources in the subframe and one or more subframes following the subframe.

5. The base station as claimed in claim 4, wherein, if a total sum of a residence amount of data waiting for communication and a data amount of periodic data that occurs until a subframe of a next assignment period is equal to or greater than an amount of data that can be communicated in the next subframe due to occurrence of non-periodic data different from the periodic data, the scheduling unit assigns, to the user apparatus, radio resources in the subframe and one or more subframes following the subframe.

6. The base station as claimed in claim 4, wherein, even when non-periodic data different from the periodic data occurs, if a total sum of a residence amount of data waiting for communication and a data amount of periodic data that occurs until a subframe of a next assignment period is equal to or less than an amount of data that can be communicated in the next subframe, the scheduling unit does not assign, to the user apparatus, radio resources in one or more subframes following the subframe.

7. The base station as claimed in claim 1, wherein the quality information is represented by a channel quality indicator indicating a downlink radio channel state.

8. The base station as claimed in claim 1, wherein the quality information indicates an uplink radio channel state.

9. A resource assignment method in a mobile communication system comprising the steps of:

obtaining quality information indicating a radio channel state of a user apparatus;
selecting an assignment period corresponding to the quality information of the user apparatus from a predetermined correspondence relationship between each of a plurality of choices of assignment periods for assigning radio resources to periodic data that occurs periodically and a value of quality information indicating a radio channel state;
determining radio resources to be assigned to the user apparatus in the assignment period that is selected; and
communicating, by radio, user data including periodic data of the user apparatus by using the radio resources that are determined.

UL BUFFER
RESIDENCE AMOUNT

TBS=450 THAT CAN BE ASSIGNED AT ONE TIME

300 300 300 300 300 300

. . .

0  20  40  60  80  100  120  TIME

×  ○  ○  ○  ○  ○  ○

ASSIGNED DATA

VOICE DATA

REMAINDER OF RESOURCE

○ ASSIGN RESOURCE

× NOT ASSIGN RESOURCE

FIG.1

EP 2 704 511 A1

FIG.2

FIG.3

EP 2 704 511 A1

# FIG.4

| TALK SPURT PERIOD | SILENT PERIOD | TALK SPURT PERIOD | SILENT PERIOD | |

TIME

EP 2 704 511 A1

# FIG.5

| ASSIGNMENT PERIOD | TRANSPORT BLOCK SIZE | NUMBER OF RESOURCE BLOCKS | QUALITY OF UPLINK | QUALITY OF DOWNLINK |
|---|---|---|---|---|
| $T_1$ (LONG) | $N_{TBS1}$ (LARGE) | $N_{RB1}$ (LARGE) | $Y_{U1} < SIR$ (GOOD) | $Y_{D1} < SIR$ (GOOD) |
| $T_2$ | $N_{TBS2}$ | $N_{RB2}$ | $Y_{U2} < SIR \leqq Y_{U1}$ | $Y_{D2} < SIR \leqq Y_{D1}$ |
| $T_3$ | $N_{TBS3}$ | $N_{RB3}$ | $Y_{U3} < SIR \leqq Y_{U2}$ | $Y_{D3} < SIR \leqq Y_{D2}$ |
| $T_4$ (SHORT) | $N_{TBS4}$ (SMALL) | $N_{RB4}$ (SMALL) | $SIR \leqq Y_{U3}$ (BAD) | $SIR \leqq Y_{D3}$ (BAD) |

# FIG.6

START — S601

k=1 — S603

SELECT ASSIGNMENT PERIOD, TRANSPORT BLOCK SIZE, AND THE NUMBER OF RESOURCE BLOCKS FOR UE #k ACCORDING TO RECEIVING QUALITY — S605

CALCULATE UPLINK DATA RESIDENCE AMOUNT OF UE #k — S607

CURRENT SUBFRAME CORRESPONDS TO ASSIGNMENT PERIOD? — S609

NO

YES

(UPLINK DATA RESIDENCE AMOUNT)>0? — S611

NO

YES

UPLINK DATA RESIDENCE AMOUNT=0 — S617

NOT SCHEDULING TARGET — S619

SCHEDULING TARGET — S613

k++ — S615

k≦K? — S621

YES

NO

ASSIGN RADIO RESOURCE — S623

END — S625

# FIG.7

START　S701

S703

k=1

S705

UE #k IS SCHEDULING TARGET?　NO

YES

S707

ASSIGN RESOURCE TO UE #k ?　NO

YES

S709

SELECT UPLINK TFR

S711

k++

S713

k≦K?　YES

NO

END　S715

FIG.8

FIG.9

FIG.10

EP 2 704 511 A1

FIG.11

UL BUFFER
RESIDENCE AMOUNT

TBS=550 THAT
CAN BE
ASSIGNED AT
ONE TIME

| | ASSIGNED DATA |
| | VOICE DATA |
| | DATA REPORTED BY BSR (NON-PERIODIC DATA) |

○ ASSIGN RESOURCE

× NOT ASSIGN RESOURCE

◎ RESOURCE ASSIGNMENT COMPLETED

— RESOURCE ASSIGNMENT NOT-COMPLETED

EP 2 704 511 A1

FIG.12

UL BUFFER RESIDENCE AMOUNT

TBS=550 THAT CAN BE ASSIGNED AT ONE TIME

Legend:
- ASSIGNED DATA (dashed outline)
- VOICE DATA (diagonal hatching)
- DATA REPORTED BY BSR (NON-PERIODIC DATA) (cross hatching)

- O ASSIGN RESOURCE
- × NOT ASSIGN RESOURCE
- ◎ RESOURCE ASSIGNMENT COMPLETED
- — RESOURCE ASSIGNMENT NOT-COMPLETED

EP 2 704 511 A1

EP 2 704 511 A1

# FIG.13

START — S601

k=1 — S603

SELECT ASSIGNMENT PERIOD, TRANSPORT BLOCK SIZE, AND THE NUMBER OF RESOURCE BLOCKS FOR UE #k ACCORDING TO RECEIVING QUALITY — S605

CALCULATE UPLINK DATA RESIDENCE AMOUNT OF UE #k — S607

CURRENT SUBFRAME CORRESPONDS TO ASSIGNMENT PERIOD? — S609 — NO

YES

(UPLINK DATA RESIDENCE AMOUNT)>0? — S611 — NO

YES

(RESIDENCE AMOUNT OF CURRENTLY REMAINING DATA) + (VOICE DATA AMOUNT THAT MAY OCCUR BY NEXT ASSIGNMENT PERIOD) > (DATA AMOUNT THAT CAN BE TRANSMITTED AT NEXT ASSIGNMENT PERIOD) ? — S131 — NO

YES

SCHEDULING TARGET — S613

UPLINK DATA RESIDENCE AMOUNT=0 — S617

NOT SCHEDULING TARGET — S619

k++ — S615

k≦K? — S621 — YES

NO

ASSIGN RADIO RESOURCE — S623

END — S625

27

<div align="center">

**INTERNATIONAL SEARCH REPORT**

</div>

| | International application No. |
|---|---|
| | PCT/JP2012/060971 |

**A. CLASSIFICATION OF SUBJECT MATTER**
*H04W72/12*(2009.01)i, *H04W72/08*(2009.01)i

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho  1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2008-053865 A  (NTT Docomo Inc.),<br>06 March 2008 (06.03.2008),<br>paragraphs [0005], [0021], [0024], [0096]<br>& EP 2056614 A1         & US 2010/232374 A1<br>& WO 2008/023647 A1      & KR 2009-042968 A<br>& CN 101529958 A         & TW 200822600 A<br>& PH 12009500346 A       & RU 2009108794 A<br>& BR 200715372 A2 | 1,7-9<br>2-6 |
| Y<br>A | WO 2004/019521 A1  (Sharp Corp.),<br>04 March 2004 (04.03.2004),<br>page 23, line 3 to page 25, line 15<br>& EP 1526659 A1         & US 2005/286422 A1<br>& AU 2003252347 A1       & CN 1685639 A | 1,7-9<br>2-6 |

☐ Further documents are listed in the continuation of Box C.   ☐ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>    20 June, 2012 (20.06.12) | Date of mailing of the international search report<br>    03 July, 2012 (03.07.12) |
| Name and mailing address of the ISA/<br>    Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011097572 A

**Non-patent literature cited in the description**

- **OSCAR FRESAN et al.** Dynamic Packet Bundling for VoIP Transmission Over Rel'7 HSUPA with 10ms TTI Length. *IEEE ISWCS,* 2007, 5008-512